# EUROPEAN PATENT APPLICATION

(11) **EP 4 599 979 A2**
(43) Date of publication of application: **13.08.2025**
(21) Application number: 25156217.9
(22) Date of filing: 06.02.2025
(51) Int. Cl.: B23P 19/00, B21J 15/32

(54) **QUALITY CONTROL STRUCTURES FOR AUTOMATED FASTENING MACHINES**

(30) Priority: 12.02.2024 US 202418439470
(71) Applicant: The Boeing Company, Arlington, VA 22202 (US)
(72) Inventor: Trout, Joshua M., Arlington, VA, 22202 (US)
(74) Representative: Hoffmann Eitle

(57) **Abstract**

Quality control structures (12) of automated fastening machines (10) comprise an elongate body (22) defining a passageway (24) and comprising one or more walls configured so that properly sized collars (14) are urged against one of the one or more walls when passing through the passageway. The one of the one or more walls define a secondary outlet (30) that is configured to restrict passage of the properly sized collars through the secondary outlet and permit passage of undesirable structures through the secondary outlet.

## Description

### FIELD

The present disclosure relates to quality control structures for automated fastening machines.

### BACKGROUND

Automated fastening machines are used in the manufacture of large structures, such as aircraft, to install fasteners. These fasteners typically include a pin and a collar that is crimped, or swaged, on the pin. The collars are fed to the swaging device typically from a vibratory bowl via blast air to a buffer, which then sends individual collars on demand. The vibratory bowls are manually filled by operators. On occasion, an operator may fill a vibratory bowl with an incorrectly sized supply of collars. In addition, the bulk source of collars may include incorrectly sized collars and so-called slugs (i.e., remnants from the manufacturing of the collars). Under-sized collars and slugs may jam the delivery of collars downstream of the vibratory bowl, leading to downtime and significant technician work.

### SUMMARY

Quality control structures of automated fastening machines comprise an elongate body that defines a passageway between an inlet and a primary outlet and that comprises one or more walls that are configured so that properly sized collars are urged against one of the walls when passing through the passageway from the inlet toward the primary outlet. One or more of these walls may each define a secondary outlet that is configured to restrict passage of the properly sized collars while permitting passage of undesirable structures - for example, under-sized collars and/or slugs. In other words, by allowing passage of undesirable structures through the secondary outlet(s) instead of allowing them to proceed to the primary outlet, a quality control structure may function to filter out these undesirable structures while permitting only properly sized collars to pass through to the primary outlet.

### BRIEF DESCRIPTION OF THE DRAWINGS

Fig. 1 is a schematic diagram representing quality control structures and automated fastening machines according to the present disclosure.
Fig. 2 is an isometric view of an example quality control structure according to the present disclosure.
Fig. 3. is a side view of the example quality control structure of Fig. 2.
Fig. 4 is another side view of the example quality control structure of Fig. 2.
Fig. 5 is another side view of the example quality control structure of Fig. 2.
Fig. 6 is another side view of the example quality control structure of Fig. 2.
Fig. 7 is a cross-sectional view of the example quality control structure of Fig. 2, taken along line 7-7 in Fig. 3.
Fig. 8 is a cross-sectional view of the example quality control structure of Fig. 2, taken along line 8-8 in Fig. 4.
Fig. 9 is a cross-sectional view of the example quality control structure of Fig. 2, taken along line 9-9 in Fig. 6
Fig. 10 is a flow chart schematically representing methods according to the present disclosure.
Fig. 11 is a flow chart schematically representing methods according to the present disclosure.

### DESCRIPTION

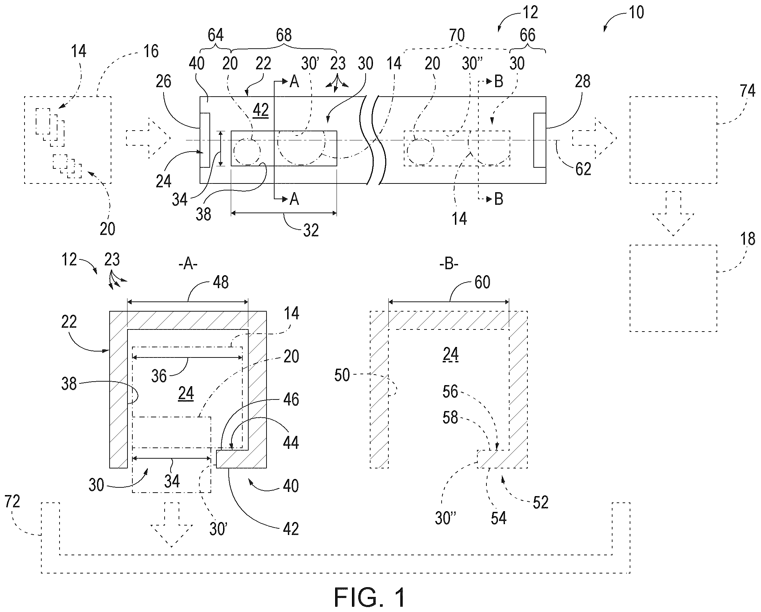

Automated fastening machines 10 and quality control structures 12 for automated fastening machines 10 are disclosed herein and schematically represented in Fig. 1. Generally, in Fig. 1, elements that are likely to be included in a given example are illustrated in solid lines, while elements that are optional to a given example or that correspond to a specific example are illustrated in broken lines. However, elements that are illustrated in solid lines are not essential to all examples of the present disclosure, and an element shown in solid lines may be omitted from a particular example without departing from the scope of the present disclosure.

Quality control structures 12 are installed in automated fastening machines 10 for removal of undesirable structures 20 from a stream of collars being transported from a supply 16 of collars to an installation tool 18 (e.g., a swaging tool). The undesirable structures 20 may be undersized collars and/or slugs that otherwise may cause a jam in the stream of collars. Quality control structures 12 additionally or alternatively may be described as filters, or as collar filters, for filtering out the undesirable structures 20.

As schematically represented in Fig. 1, quality control structures 12 comprise at least an elongate body 22 that defines a passageway 24 and that comprises one or more walls 23 that configured so that properly sized collars 14 are urged against one of the walls 23 when passing through the passageway 24. The one wall 23 against which the properly sized collars 14 are urged defines a secondary outlet 30 that is configured to restrict passage of the properly sized collars 14 through the secondary outlet 30 while permitting passage of any undesirable structures 20 through the secondary outlet 30. As schematically represented in the cross-section of the elongate body 22 presented in Fig. 1, in some examples, the wall 23 against which the properly sized collars 14 are urged comprises a lip 46 that at least partially defines and extends along the secondary outlet 30. The lip 46 is configured to engage the properly sized collars 14 as the properly sized collars pass through the passageway 24.

Additionally or alternatively, as schematically represented in Fig. 1, quality control structures 12 may be described as comprising an elongate body 22 that defines a passageway 24, an inlet 26 to the passageway 24 that is sized to receive the properly sized collars 14, a primary outlet 28 from the passageway 24 that is sized to dispense the properly sized collars 14, and one or more secondary outlets 30 from the passageway 24 between the inlet 26 and the primary outlet 28. The secondary outlet(s) 30 are sized to dispense the undesirable structures 20 and restrict passage of the properly sized collars 14. In some examples, the quality control structure 12 is configured to be operatively installed with the secondary outlets 30 being positioned vertically below directly adjacent regions of the passageway 24. Accordingly, gravity may serve to cause the undesirable structures 20 to pass through the secondary outlet(s) 30 as the undesirable structures 20 pass through the passageway 24.

Herein, with respect to a quality control structure 12 and the elongate body 22 thereof, toward the inlet 26 may be described as upstream and toward the primary outlet 28 may be described as downstream.

In some examples, the inlet 26 is sized and shaped to correspond to a specifically dimensioned collar, for example, corresponding to the diameter and height of the properly sized collars 14. Accordingly, the inlet 26 may serve to restrict oversized structures from entering the passageway 24, such that the quality control structure 12 need only remove, or filter out, undesirable structures that are undersized.

As schematically represented in Fig. 1, each secondary outlet 30 has a secondary-outlet length 32 and a secondary-outlet width 34 that is less than the secondary-outlet length 32 and that is less than a diameter 36 of the properly sized collars 14. Accordingly, the properly sized collars 14 will be restricted from passing through the secondary outlet(s) 30 as they pass through the passageway 24. Moreover, by having a secondary-outlet length 32 longer than the secondary-outlet width 34, more opportunities are provided for the undesirable structures 20 to exit the passageway 24 via the secondary outlet(s) 30 and the less likely an undesirable structure 20 may become jammed within the secondary outlet(s) 30. In some examples, the secondary-outlet length 32 is 2 to 5, or more, times greater than the secondary-outlet width 34.

With continued reference to Fig. 1, in some examples, the elongate body 22 comprises a first floor 38 that faces the passageway 24 and along which the properly sized collars 14 are configured to roll or slide as they pass through the passageway 24. In such examples, the elongate body 22 also may comprise a first side wall 40 that comprises a first-side-wall outer face 42 that faces away from the passageway 24, and a first-side-wall inner face 44 that faces the passageway 24 and that extends from the first floor 38. A first secondary outlet 30' of the one or more secondary outlets 30 extends through the first side wall 40. In some such examples and as perhaps best seen in the schematic cross-section of the elongate body 22 illustrated in solid lines in Fig. 1, the first-side-wall inner face 44 comprises a first-side-wall lip 46 that extends along the first secondary outlet 30' opposite the first floor 38. In some examples, the first-side-wall inner face 44 has a first-side-wall maximum inner-face width 48 that is greater than the secondary-outlet width 34. Accordingly, the first-side-wall maximum inner-face width 48 is sized to accommodate the diameter 36 of the properly sized collars 14. As a result, as the properly sized collars 14 slide or roll along the first floor 38 and are urged against the first side wall 40 as the properly sized collars 14 pass through the passageway 24, the first-side-wall lip 46 engages the properly sized collars 14 to restrict the properly sized collars 14 from exiting the passageway 24 via the first secondary outlet 30'.

As best seen in the cross-section illustrated in broken lines in Fig. 1, in some examples of quality control structures 12, the elongate body 22 further comprises a second floor 50 that faces the passageway 24 and along which the properly sized collars 14 are configured to roll or slide. In such examples, the elongate body 22 also comprises a second side wall 52 that comprises a second-side-wall outer face 54 that faces away from the passageway 24 and a second-side-wall inner face 56 that faces the passageway 24 and that extends from the second floor 50. In such examples, a second secondary outlet 30" of the one or more secondary outlets 30 extends through the second side wall 52. In some such examples and as perhaps best seen in the schematic cross-section of the elongate body 22 illustrated in dashed lines in Fig. 1, the second-side-wall inner face 56 comprises a second-side-wall lip 58 that extends along the second secondary outlet 30" opposite the second floor 50. In some examples, the second-side-wall inner face 56 has a second-side-wall maximum inner-face width 60 that is greater than the secondary-outlet width 34. Accordingly, the second-side-wall maximum inner-face width 60 is sized to accommodate the diameter 36 of the properly sized collars 14. As a result, as the properly sized collars 14 slide or roll along the second floor 50 and are urged against the second side wall 52 as the properly sized collars 14 pass through the passageway 24, the second-side-wall lip 58 engages the properly sized collars 14 to restrict the properly sized collars 14 from exiting the passageway 24 via the second secondary outlet 30". While Fig. 1 schematically illustrates two secondary outlets 30, any number of secondary outlets 30 may be utilized with a quality control structure 12, including three or more secondary outlets 30.

In some examples that include two secondary outlets 30, the second floor 50 is not coextensive with the first floor 38, and the second-side-wall inner face 56 is not coextensive with the first-side-wall inner face 44. In particular and as schematically represented by the schematic break in the elongate body 22 in Fig. 1, the second floor 50 may be distinct from the first floor 38, and the second side wall 52 may be distinct from the first side wall 40. In other words, the elongate body 22 may be shaped or otherwise configured so that the properly sized collars 14 roll or slide along and are urged against different walls of the elongate body 22 as they pass through the passageway 24.

In some such examples, the second floor 50 is opposite the first floor 38 relative to the passageway 24, and the second-side-wall inner face 56 is opposite the first-side-wall inner face 44 relative to the passageway 24. For example, one or more of the walls 23 of the elongate body 22 may be configured to define a curve or curves to the passageway, such that when the quality control structure 12 is operatively installed, each of the first side wall 40 and the second side wall 52 is positioned generally on an underside of the quality control structure 12 so that gravity will enable undesirable structures 20 to pass through a first secondary outlet 30' or a second secondary outlet 30" as they pass through the passageway 24.

With continued reference to Fig. 1, in some examples, the passageway 24 may be described as having a longitudinal axis 62, and the elongate body 22 may be described as comprising an inlet region 64 that defines the inlet 26, a primary outlet region 66 that defines the primary outlet 28, and a first secondary-outlet region 68 that defines the first secondary outlet 30'. In some examples, the longitudinal axis 62 curves and is not straight along its entire length. In some examples, the longitudinal axis 62 is straight within the inlet region 64 and curves within the first secondary-outlet region 68. Accordingly, the inlet region 64 may be configured to operatively and easily receive the properly sized collars 14 via the inlet 26 (e.g., due to gravity), and then because of the curve in the longitudinal axis 62 within the first secondary-outlet region 68, the properly sized collars 14 are urged against the first side wall 40 as they pass through the first secondary-outlet region 68. In particular, when the quality control structure 12 is operatively installed, the longitudinal axis 62 may curve away from vertical within the first secondary-outlet region 68 so that the first secondary outlet 30' at least partially faces vertically downward.

In some examples, the elongate body 22 also may be described as comprising a second secondary-outlet region 70 that defines the second secondary outlet 30", and in some such examples, the longitudinal axis 62 curves within the second secondary-outlet region 70. In some such examples when the quality control structure 12 is operatively installed, the longitudinal axis 62 may curve toward vertical within the second secondary-outlet region 70 so that the second secondary outlet 30" at least partially faces vertically downward.

In some examples, the longitudinal axis 62 is straight within the primary outlet region 66, and in some such examples, the longitudinal axis 62 within the inlet region 64 is parallel to or colinear with the longitudinal axis 62 within the primary outlet region 66.

By including two secondary outlets 30 through different walls 23 of the elongate body 22 and having the longitudinal axis 62 curve away from and back toward vertical along its length, the linear distance between the inlet 26 and the primary outlet 28 may be reduced when the inlet region 64 and the primary outlet region 66 are parallel or colinear with each other. This may be particularly useful when installing a quality control structure 12 into an existing automated fastening machine 10, such as by simply replacing a down tube with the elongate body 22.

In some examples, the first floor 38 twists within the first secondary-outlet region 68 from proximate the inlet region 64 toward the primary outlet region 66, and in some such examples, the second floor 50 similarly twists within the second secondary-outlet region 70 from proximate the first secondary-outlet region 68 toward the primary outlet region 66.

In other examples, the longitudinal axis 62 is straight along an entirety of its length.

In some examples, the first-side-wall inner face 44 ramps away from the longitudinal axis 62 toward the first secondary outlet 30' opposite the outlet region 66, that is, on the upstream end of the first secondary outlet 30'. Similarly, in some examples, the second-side-wall inner face 56 ramps away from the longitudinal axis 62 toward the second secondary outlet 30" opposite the outlet region 66, that is, on the upstream end of the second secondary outlet 30". These regions of the first-side-wall inner face 44 may be described as ramped, as ramped surfaces, as tapered, or as tapered surfaces. In such examples, an undesirable structure 20 may more easily pass through the respective secondary outlet 30 than if the ramped surface were not present.

In some examples, the second-side-wall inner face 56 ramps toward the longitudinal axis 62 away from the first secondary outlet 30' opposite the inlet region 64, that is, on the end downstream of first secondary outlet 30'. Similarly, in some examples, the second-side-wall inner face 56 ramps toward the longitudinal axis 62 away from the second secondary outlet 30" opposite the inlet region 64, that is, on the downstream end of the second secondary outlet 30". These regions of the second-side-wall inner face 56 may be described as ramped, as ramped surfaces, as tapered, or as tapered surfaces. In such examples, the properly sized collars 14 may be less likely to become jammed within the passageway 24 as the properly sized collars 14 pass the secondary outlet(s) 30.

In some examples, the elongate body 22 is a monolithic structure, such that may be additively manufactured.

With continued reference to Fig. 1, automated fastening machines 10 may comprise a supply 16 for properly sized collars 14, an installation tool 18 configured to operatively install the properly sized collars 14, and a quality control structure 12 positioned to receive the properly sized collars 14 and the undesirable structures 20 from the supply 16 and to deliver only the properly sized collars 14 toward the installation tool 18.

Some examples of automated fastening machines 10 further comprise a collection structure 72, such as a bin or a basin, that is positioned external to the quality control structure 12 to collect the undesirable structures 20 as they exit the quality control structure 12 through a secondary outlet 30.

Some examples of automated fastening machines 10 further comprise a buffer 74 that is operatively positioned between the quality control structure 12 and the installation tool 18 and that is configured to buffer the properly sized collars 14 for delivery to the installation tool 18.

In some examples of automated fastening machines 10, the supply 16 comprises a hopper 76, such as a vibratory bowl.

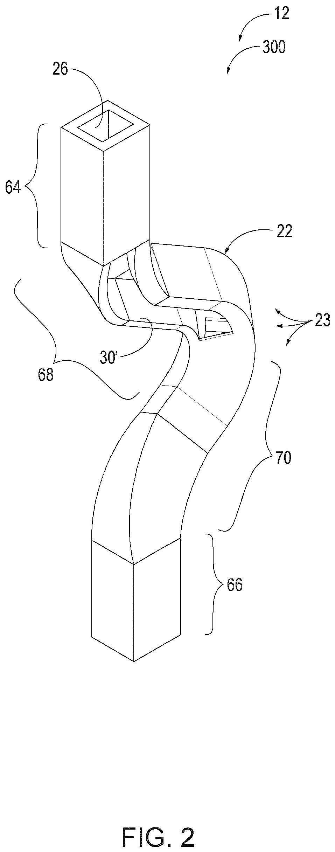

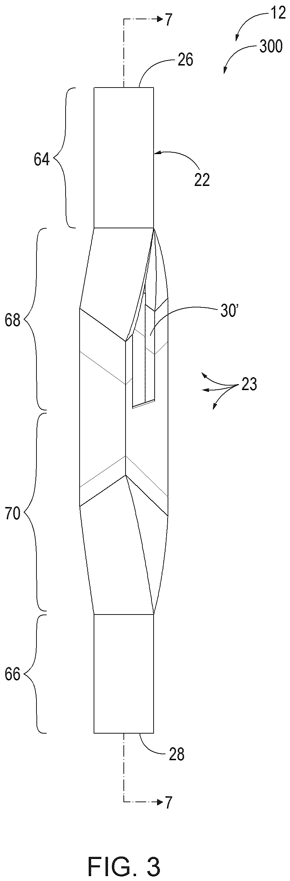

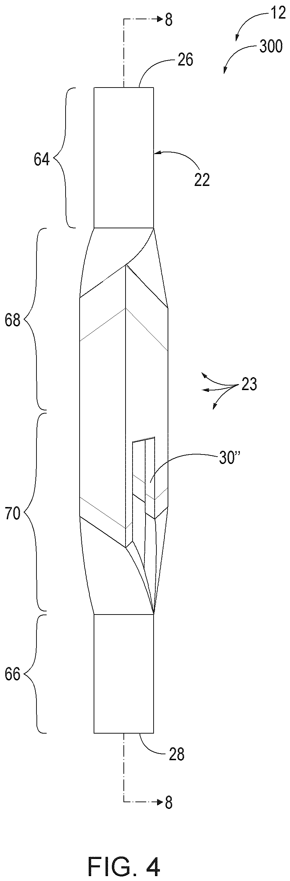

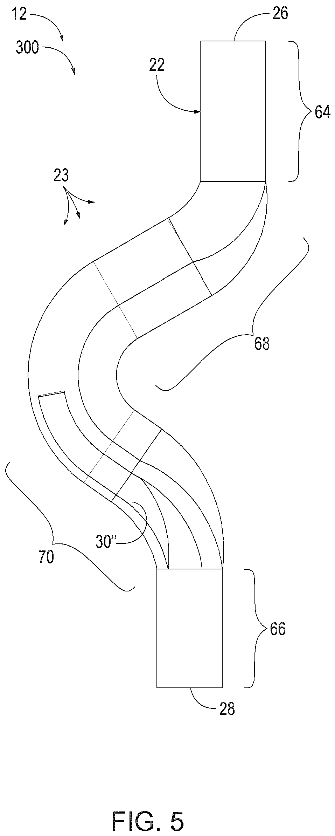

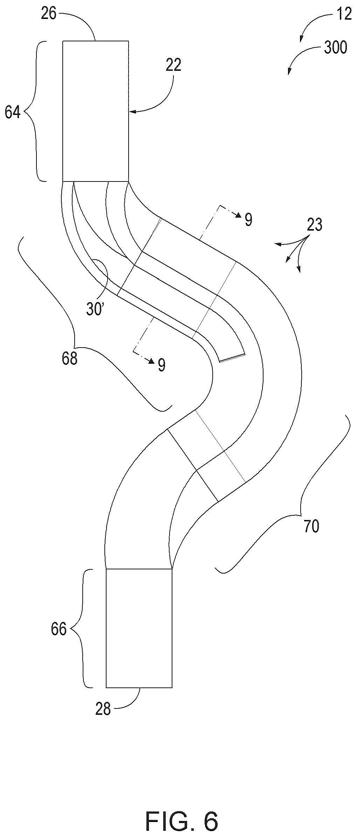

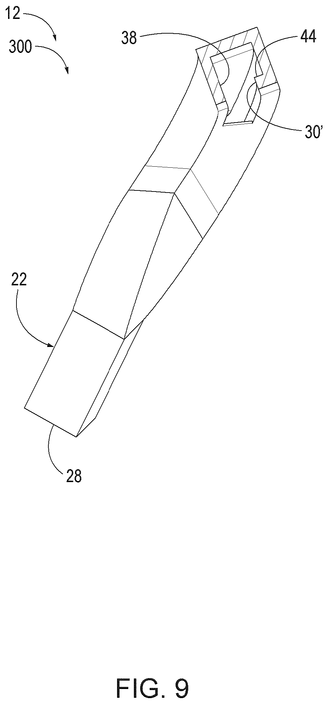

Turning now to Figs. 2-9, an illustrative non-exclusive example of a quality control structure 12 in the form of quality control structure 300 is illustrated. Where appropriate, the reference numerals from the schematic illustration of Fig. 1 are used to designate corresponding parts of the quality control structure 300; however, the example of Figs. 2-9 is non-exclusive and does not limit quality control structures 12 to the illustrated embodiment of the quality control structure 300. That is, quality control structures 12 are not limited to the specific embodiment of the illustrated quality control structure 300, and quality control structures 12 may incorporate any number of the various aspects, configurations, characteristics, properties, etc. of quality control structures 12 that are illustrated in and discussed with reference to the schematic representation of Fig. 1 and/or the embodiment of Figs. 2-9, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the quality control structure 300; however, it is within the scope of the present disclosure that the previously discussed features, variants, etc. may be utilized with the quality control structure 300.

The quality control structure 300 is an example of a quality control structure 12 whose elongate body 22 defines two secondary outlets 30 through opposing walls 23 of the elongate body 22. Moreover, the elongate body 22 of the quality control structure 300 has an inlet region 64 that is straight, a first secondary-outlet region 68 that curves away from vertical, a second secondary-outlet region 70 that curves back toward vertical, and a primary outlet region 66 that is straight and parallel with the inlet region 64. Moreover, within the first secondary-outlet region 68, the profile of the elongate body 22 twists clockwise (when viewed from above) away from the inlet region 64, and within the second secondary-outlet region 70, the profile of the elongate body 22 twists counterclockwise (when viewed from above) away from the inlet region 64. The quality control structure 300 is configured to be installed with the inlet 26 positioned above the primary outlet 28.

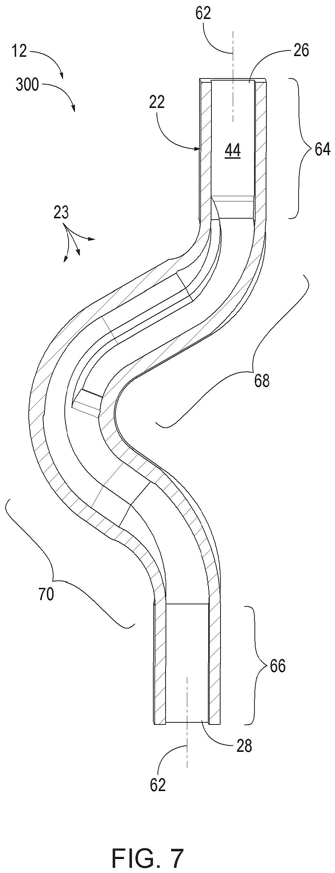

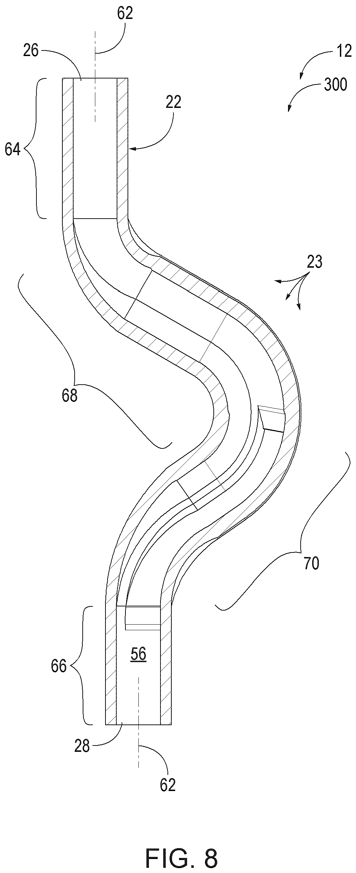

As best seen in Figs. 7 and 8, the quality control structure 300 also is an example of a quality control structure 12 whose first-side-wall inner face 44 and second-side-wall inner face 56 ramp away from the longitudinal axis 62 upstream of the first secondary outlet 30' and the second secondary outlet 30", respectively, and toward the longitudinal axis 62 downstream of the first secondary outlet 30' and the second secondary outlet 30". It can thus be seen that the physical configuration of the passageway 24, as defined by the walls 23 of the quality control structure 300 and the positions of the secondary outlets 30' and 30", that both properly sized collars and undesirable structures fed through the inlet 26 will be urged by gravity against the walls that define the secondary outlets 30. However, the dimensions of the secondary outlets 30 will allow undesirable structures, such as undersized collars and/or slugs to pass through, and thereby exit the passageway 24 before reaching the primary outlet 28, while ensuring that properly sized collars stay in the passageway 24 and are guided toward the primary outlet 28.

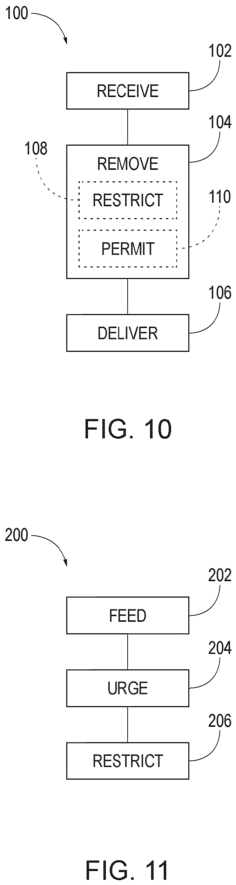

Figs. 10 and 11 schematically provide flowcharts that represent illustrative, non-exclusive examples of methods according to the present disclosure. In Figs. 10 and 11, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Figs. 10 and 11 are not limiting, and other methods and steps are within the scope of the present disclosure, including methods having greater than or fewer than the number of steps illustrated, as understood from the discussions herein.

As schematically represented in Fig. 10, methods 100 comprise receiving 102 properly sized collars 14 and undesirable structures 20 in a collar stream, removing 104 the undesirable structures 20 from the collar stream, and delivering 106 the collar stream without the undesirable structures 20 to an installation tool 18. In some examples, the receiving 102 comprises receiving the properly sized collars 14 and the undesirable structures 20 via gravity, and the removing 104 comprises removing the undesirable structures 20 via gravity. In some examples, the removing 104 comprises restricting 108 the properly sized collars 14 from exiting the collar stream and permitting 110 the undesirable structures 20 to exit the collar stream. Some methods 100 are performed by a quality control structure 12 according to the present disclosure.

As schematically represented in Fig. 11, methods 200 comprise feeding 202 properly sized collars 14 and undesirable structures 20 into a passageway 24, urging 204 the properly sized collars 14 and the undesirable structures 20 against a wall 23 that at least partially defines the passageway 24, and restricting 206 the properly sized collars 14 from passing through a secondary outlet 30 defined in the wall 23 while permitting 208 the undesirable structures 20 to pass through the secondary outlet 30. In some examples, the feeding 202, the urging 204, and the permitting 208 are caused at least in part by gravity. Some methods 200 are performed by a quality control structure 12 or an automated fastening machine 10 according to the present disclosure.

Illustrative, non-exclusive examples of inventive subject matter according to the present disclosure are described in the following enumerated paragraphs:
A. A quality control structure (12) of an automated fastening machine (10), the quality control structure (12) comprising:
   an elongate body (22) defining a passageway (24) and comprising one or more walls (23) configured so that properly sized collars (14) are urged against one of the one or more walls (23) when passing through the passageway (24), wherein the one of the one or more walls (23) defines a secondary outlet (30) that is configured to restrict passage of the properly sized collars (14) through the secondary outlet (30) and permit passage of undesirable structures (20) through the secondary outlet (30).
A1. The quality control structure (12) of paragraph A, wherein the one of the one or more walls (23) comprises a lip (46) that at least partially defines and extends along the secondary outlet (30) and that is configured to engage the properly sized collars (14) as the properly sized collars pass through the passageway (24).
A2. The quality control structure (12) of any of paragraphs A-A1, further comprising the subject matter of any of paragraphs B-B3.8.
B. A quality control structure (12) of an automated fastening machine (10) for transporting properly sized collars (14) from a supply (16) of the properly sized collars (14) toward an installation tool (18) and for removing undesirable structures (20) from the supply (16) of the properly sized collars (14), the quality control structure (12) comprising:
   an elongate body (22) defining a passageway (24), an inlet (26) to the passageway (24) sized to receive the properly sized collars (14), a primary outlet (28) from the passageway (24) sized to dispense the properly sized collars (14), and one or more secondary outlets (30) from the passageway (24) between the inlet (26) and the primary outlet (28), wherein the one or more secondary outlets (30) are sized to dispense the undesirable structures (20) and restrict passage of the properly sized collars (14);
   wherein the quality control structure (12) is configured to be operatively installed with the one or more secondary outlets (30) positioned vertically below directly adjacent regions of the passageway (24).
B1. The quality control structure (12) of paragraph B, wherein each of the one or more secondary outlets (30) has a secondary-outlet length (32) and a secondary-outlet width (34) that is less than the secondary-outlet length (32) and that is less than a diameter (36) of the properly sized collars (14).
B2. The quality control structure (12) of any of paragraphs B-B1, wherein the elongate body (22) comprises:
   a first floor (38) that faces the passageway (24) and along which the properly sized collars (14) are configured to roll or slide; and
   a first side wall (40) comprising a first-side-wall outer face (42) that faces away from the passageway (24) and a first-side-wall inner face (44) that faces the passageway (24) and extends from the first floor (38);
   wherein a first secondary outlet (30') of the one or more secondary outlets (30) extends through the first side wall (40).
B2.1. The quality control structure (12) of paragraph B2, wherein the first-side-wall inner face (44) comprises a first-side-wall lip (46) extending along the first secondary outlet (30') opposite the first floor (38).
B2.2. The quality control structure (12) of any of paragraphs B2-B2.1 when depending from paragraph B1, wherein the first-side-wall inner face (44) has a first-side-wall maximum inner-face width (48) that is greater than the secondary-outlet width (34).
B2.3. The quality control structure (12) of any of paragraphs B2-B2.2, wherein the elongate body (22) further comprises:
   a second floor (50) that faces the passageway (24) and along which the properly sized collars (14) are configured to roll or slide; and
   a second side wall (52) comprising a second-side-wall outer face (54) that faces away from the passageway (24) and a second-side-wall inner face (56) that faces the passageway (24) and extends from the second floor (50);
   wherein a second secondary outlet (30") of the one or more secondary outlets (30) extends through the second side wall (52).
B2.3.1. The quality control structure (12) of paragraph B2.3, wherein the second-side-wall inner face (56) comprises a second-side-wall lip (58) extending along the second secondary outlet (30") opposite the second floor (50).
B2.3.2. The quality control structure (12) of any of paragraphs B2.3-B2.3.1 when depending from paragraph B1, wherein the second-side-wall inner face (56) has a second-side-wall maximum inner-face width (60) that is greater than the secondary-outlet width (34).
B2.3.3. The quality control structure (12) of any of paragraphs B2.3-B2.3.2, wherein the second floor (50) is not coextensive with the first floor (38), and wherein the second-side-wall inner face (56) is not coextensive with the first-side-wall inner face (44).
B2.3.4. The quality control structure (12) of any of paragraphs B2.3-B2.3.2, wherein the second floor (50) is opposite the first floor (38) relative to the passageway (24), and wherein the second-side-wall inner face (56) is opposite the first-side-wall inner face (44) relative to the passageway (24).
B3. The quality control structure (12) of any of paragraphs B-B2.3.4,
   wherein the passageway (24) has a longitudinal axis (62); and
   wherein the elongate body (22) comprises an inlet region (64) defining the inlet (26), a primary outlet region (66) defining the primary outlet (28), and a first secondary-outlet region (68) that defines a/the first secondary outlet (30') of the one or more secondary outlets (30).
B3.1. The quality control structure (12) of paragraph B3, wherein the longitudinal axis (62) curves.
B3.2. The quality control structure (12) of any of paragraphs B3-B3.1, wherein the longitudinal axis (62) is straight within the inlet region (64) and curves within the first secondary-outlet region (68).
B3.2.1. The quality control structure (12) of paragraph B3.2,
   wherein the elongate body (22) further comprises a second secondary-outlet region (70) that defines a/the second secondary outlet (30) of the one or more secondary outlets (30); and
   wherein the longitudinal axis (62) curves within the second secondary-outlet region (70).
B3.2.2. The quality control structure (12) of any of paragraphs B3.2-B3.2.1, wherein the longitudinal axis (62) is straight within the primary outlet region (66).
B3.2.2.1. The quality control structure (12) of paragraph B3.2.2, wherein the longitudinal axis (62) within the inlet region (64) is parallel to or colinear with the longitudinal axis (62) within the primary outlet region (66).
B3.3. The quality control structure (12) of any of paragraphs B3-B3.2 when depending from paragraph B2, wherein the first floor (38) twists within the first secondary-outlet region (68) from proximate the inlet region (64) toward the primary outlet region (66).
B3.3.1. The quality control structure (12) of paragraph B3.3 when depending from paragraph B3.2.1 and paragraph B2.3, wherein the second floor (50) twists within the second secondary-outlet region (70) from proximate the first secondary-outlet region (68) toward the primary outlet region (66).
B3.4 The quality control structure (12) of paragraph B3, wherein the longitudinal axis (62) is straight along an entirety of its length.
B3.5. The quality control structure (12) of any of paragraphs B3-B3.4 when depending from paragraph B2, wherein the first-side-wall inner face (44) ramps away from the longitudinal axis (62) toward the first secondary outlet (30') opposite the outlet region (66).
B3.6. The quality control structure (12) of any of paragraphs B3-B3.5 when depending from paragraph B2, wherein the first-side-wall inner face (44) ramps toward the longitudinal axis (62) away the first secondary outlet (30') opposite the inlet region (64).
B3.7. The quality control structure (12) of any of paragraphs B3-B3.6 when depending from paragraph B2.3, wherein the second-side-wall inner face (56) ramps away from the longitudinal axis (62) toward the second secondary outlet (30") opposite the outlet region (66).
B3.8. The quality control structure (12) of any of paragraphs B-B3.7 when depending from paragraph B2.3, wherein the second-side-wall inner face (56) ramps toward the longitudinal axis (62) away from the second secondary outlet (30") opposite the inlet region (64).
C. An automated fastening machine (10), comprising:
   a supply (16) for properly sized collars (14);
   an installation tool (18) configured to operatively install the properly sized collars (14); and
   the quality control structure (12) of any of paragraphs A-B3.8 positioned to receive the properly sized collars (14) and the undesirable structures (20) from the supply (16) and to deliver only the properly sized collars (14) toward the installation tool (18).
C1. The automated fastening machine (10) of paragraph C, further comprising a collection structure (72) positioned to collect the undesirable structures (20) as they exit the quality control structure (12).
C2. The automated fastening machine (10) of any of paragraphs C-C1, further comprising a buffer (74) operatively positioned between the quality control structure (12) and the installation tool (18) and configured to buffer the properly sized collars (14) for delivery to the installation tool (18).
C3. The automated fastening machine (10) of any of paragraphs C-C2, wherein the supply (16) comprises a hopper (76).
C3.1. The automated fastening machine (10) of paragraph C3.1, wherein the hopper (76) comprises a vibratory bowl.
D. Additively manufacturing the quality control structure (12) of any of paragraphs A-B3.8.
E. A method (100), comprising:
   receiving (102) properly sized collars (14) and undesirable structures (20) in a collar stream;
   removing (104) the undesirable structures (20) from the collar stream; and
   delivering (106) the collar stream without the undesirable structures (20) to an installation tool (18).
E1. The method (100) of paragraph E,
   wherein the receiving (102) comprises receiving the properly sized collars (14) and the undesirable structures (20) via gravity; and
   wherein the removing (104) comprises removing the undesirable structures (20) via gravity.
E2. The method (100) of any of paragraphs E-E1, wherein the removing (104) comprises restricting (108) the properly sized collars (14) from exiting the collar stream and permitting (110) the undesirable structures (20) to exit the collar stream.
E3. The method (100) of any of paragraphs E-E2, performed by the quality control structure (12) of any of paragraphs A-B3.8 or the automated fastening machine (10) of any of paragraphs C-C3.1.
F. A method (200), comprising:
   feeding (202) properly sized collars (14) and undesirable structures (20) into a passageway (24);
   urging (204) the properly sized collars (14) and the undesirable structures (20) against a wall (23) that at least partially defines the passageway (24); and
   restricting (206) the properly sized collars (14) from passing through a secondary outlet (30) defined in the wall (23) while permitting (208) the undesirable structures (20) to pass through the secondary outlet (30).
F1. The method (200) of paragraph F, wherein the feeding (202), the urging (204), and the permitting (208) are caused at least in part by gravity.
F2. The method (200) of any of paragraphs F-F1, performed by the quality control structure (12) of any of paragraphs A-B3.8 or the automated fastening machine (10) of any of paragraphs C-C3.1.
G. The use of the quality control structure (12) of any of paragraphs A-B3.8 to remove undesirable structures (20) from a supply (16) of properly sized collars (14).

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A quality control structure (12) for an automated fastening machine (10) for transporting properly sized collars (14) from a supply (16) of the properly sized collars (14) toward an installation tool (18) and for removing undesirable structures (20) from the supply (16) of the properly sized collars (14), the quality control structure (12) comprising:
an elongate body (22) defining a passageway (24), an inlet (26) to the passageway (24) sized to receive the properly sized collars (14), a primary outlet (28) from the passageway (24) sized to dispense the properly sized collars (14), and one or more secondary outlets (30) from the passageway (24) between the inlet (26) and the primary outlet (28), wherein the one or more secondary outlets (30) are sized to dispense the undesirable structures (20) and restrict passage of the properly sized collars (14);
wherein the quality control structure (12) is configured to be operatively installed with the one or more secondary outlets (30) positioned vertically below directly adjacent regions of the passageway (24).

2. The quality control structure (12) of claim 1, wherein each of the one or more secondary outlets (30) has a secondary-outlet length (32) and a secondary-outlet width (34) that is less than the secondary-outlet length (32) and that is less than a diameter (36) of the properly sized collars (14).

3. The quality control structure (12) of claim 1 or 2, wherein the elongate body (22) comprises:
a first floor (38) that faces the passageway (24) and along which the properly sized collars (14) are configured to roll or slide; and
a first side wall (40) comprising a first-side-wall outer face (42) that faces away from the passageway (24) and a first-side-wall inner face (44) that faces the passageway (24) and extends from the first floor (38);
wherein a first secondary outlet (30') of the one or more secondary outlets (30) extends through the first side wall (40),
optionally, wherein the first-side-wall inner face (44) comprises a first-side-wall lip (46) extending along the first secondary outlet (30) opposite the first floor (38).

4. The quality control structure (12) of claim 3 as dependent on claim 2,
wherein the first-side-wall inner face (44) has a first-side-wall maximum inner-face width (48) that is greater than the secondary-outlet width (34).

5. The quality control structure (12) of claim 3 or 4, wherein the elongate body (22) further comprises:
a second floor (50) that faces the passageway (24) and along which the properly sized collars (14) are configured to roll or slide; and
a second side wall (52) comprising a second-side-wall outer face (54) that faces away from the passageway (24) and a second-side-wall inner face (56) that faces the passageway (24) and extends from the second floor (50);
wherein a second secondary outlet (30) of the one or more secondary outlets (30) extends through the second side wall (52).

6. The quality control structure (12) of claim 5, wherein the second-side-wall inner face (56) comprises a second-side-wall lip (58) extending along the second secondary outlet (30) opposite the second floor (50).

7. The quality control structure (12) of claim 5 or 6 as dependent on claim 2,
wherein the second-side-wall inner face (56) has a second-side-wall maximum inner-face width (60) that is greater than the secondary-outlet width (34).

8. The quality control structure (12) of any one of claims 5 to 7, wherein the second floor (50) is not coextensive with the first floor (38), and wherein the second-side-wall inner face (56) is not coextensive with the first-side-wall inner face (44).

9. The quality control structure (12) of any one of claims 5 to 7, wherein the second floor (50) is opposite the first floor (38) relative to the passageway (24), and wherein the second-side-wall inner face (56) is opposite the first-side-wall inner face (44) relative to the passageway (24).

10. The quality control structure (12) of any one of claims 1 to 9,
wherein the passageway (24) has a longitudinal axis (62); and
wherein the elongate body (22) comprises an inlet region (64) defining the inlet (26), a primary outlet region (66) defining the primary outlet (28), and a first secondary-outlet region (68) that defines a first secondary outlet (30') of the one or more secondary outlets (30),
optionally, wherein the longitudinal axis (62) curves,
further optionally, wherein the longitudinal axis (62) is straight within the inlet region (64) and curves within the first secondary-outlet region (68).

11. The quality control structure (12) of claim 10,
wherein the elongate body (22) further comprises a second secondary-outlet region (70) that defines a second secondary outlet (30) of the one or more secondary outlets (30); and
wherein the longitudinal axis (62) curves within the second secondary-outlet region (70).

12. The quality control structure (12) of claim 10 or 11, wherein the longitudinal axis (62) is straight within the primary outlet region (66),
optionally, wherein the longitudinal axis (62) within the inlet region (64) is parallel to or colinear with the longitudinal axis (62) within the primary outlet region (66).

13. The quality control structure (12) of claim 10 as dependent on claim 3,
wherein the first floor (38) twists within the first secondary-outlet region (68) from proximate the inlet region (64) toward the primary outlet region (66).

14. The quality control structure (12) of claim 10 as dependent on claims 5 and 3,
wherein the first floor (38) twists within the first secondary-outlet region (68) from proximate the inlet region (64) toward the primary outlet region (66);
wherein the elongate body (22) further comprises a second secondary-outlet region (70) that defines a second secondary outlet (30) of the one or more secondary outlets (30);
wherein the longitudinal axis (62) curves within the second secondary-outlet region (70); and
wherein the second floor (50) twists within the second secondary-outlet region (70) from proximate the first secondary-outlet region (68) toward the primary outlet region (66).

15. The quality control structure (12) of any one of claims 10 to 14 as dependent on claim 3, wherein the first-side-wall inner face (44) ramps toward the longitudinal axis (62) away the first secondary outlet (30') opposite the inlet region (64).
